# EUROPEAN PATENT SPECIFICATION

(11) **EP 3 277 564 B1**
(45) Date of publication and mention of the grant of the patent: **18.03.2020**
(21) Application number: 16771513.5
(22) Date of filing: 01.04.2016
(51) Int. Cl.: B62J 7/08, B62J 7/04

(54) **ENGAGEMENT SYSTEM**
EINRÜCKSYSTEM
SYSTÈME DE MISE EN PRISE

(30) Priority: 02.04.2015 HK 15103360
(43) Date of publication of application: 07.02.2018
(73) Proprietor: Restless Travellers Limited, Hong Kong (CN)
(72) Inventor: MANGINI, Stefano Giuseppe, New Territories Hong Kong (CN)
(74) Representative: McIlroy, Steven David
(86) International application number: PCT/IB2016/051864
(87) International publication number: WO 2016/157135

(56) References cited:
- CN-U- 201 882 181
- CN-U- 203 864 858
- CN-Y- 201 186 695
- CN-Y- 201 186 695
- JP-A- 2000 025 669
- JP-A- 2013 035 312
- TW-A- 200 930 609
- US-B2- 7 775 411

## Description

### FIELD OF THE INVENTION

The present invention relates to an engagement system, more particularly, to an engagement system for attaching a container onto a vehicle.

### BACKGROUND OF THE INVENTION

Vehicles have been used for many years to transport items in a short space of time relative to transport on foot. They are particularly useful for transporting heavy, awkward or cumbersome loads. Different vehicles have different storage capacities and, hence, different capabilities. Non-covered vehicles such as motorcycles, bicycles or quad bikes tend to have low storage capacity and therefore limited capabilities for transporting items.

Motorcycles, for example, comprise a frame, two wheels mounted to the frame and an engine that drives the frame along a surface whilst the frame is supported by the wheels. Motorcycles are very convenient being small, fast and nimble compared with other conventional road vehicles which allow a user of a motorcycle to quickly manoeuvre through traffic and congestion. However, a problem with motorcycles is that, given their small size and open exterior, they have very limited storage space compared with, for example, cars. To overcome this problem to an extent, a motorcycle frame typically includes a rear mounted bracket which is configured to receive a storage container and hold the container fixed relative to the frame. Thus, a limited amount of goods can be transported on a motorcycle.

Typical storage containers mounted to the frame exterior of the motorcycle, are hard, rigid material to protect the contents of the container from damage, not only from the elements, but also in the event of an accident. The use of hard wearing materials tends to make storage containers of this kind heavy, bulky and awkward to carry by a user when it is desired to transit the container from the motorcycle to another location such as indoors.

Solutions to this problem have been proposed. One such solution is to provide a mountable storage container comprising wheels and an extendible handle which enables the container to be easily rolled along the ground by the user. A problem with these existing solutions is that the container must be custom made to enable the container to fit the matching bracket of a motorcycle. Thus, it is not possible to use different rollable storage containers with a particular mounting bracket which is already fitted to the vehicle.

A further problem with existing solutions is that the locking mechanism is incorporated into the container which increases the complexity and weight of the container. In the case of wheeled containers that are configured to be attached to a frame of a motorcycle, incorporation of the locking mechanism into the container requires alteration of the position of the wheels such that when the container is attached to a motorcycle, the wheels are both arranged to one side of the motorcycle which therefore alters the centre of gravity of the motorcycle and affects the balance of a user of the motorcycle.

It is an object of the present invention to provide an improved engagement system that mitigates the above problems. Document CN201186695Y shows the preamble of claim 1.

### SUMMARY OF THE INVENTION

In a first aspect, there is provided an engagement system for attaching a container to a vehicle, the engagement system comprising:
a support which is attachable to a container;
a base which is attachable to a vehicle and having a locking member for releasably securing the support to the base;
wherein the base and the support are interengageable such that upon attachment of the base to the vehicle and upon attachment of the support to the container, the base and the support are maintained in interengagement with each other by the locking member to releasably secure the container to the vehicle.

The support may be releasably attachable to a container for attachment of the support with at least one of a plurality of different storage containers. The support may comprise one or more wheels. The support may comprise a retractable handle.

The locking member comprises a key operable locking mechanism and the support comprises an aperture through which at least part of the locking mechanism may extend so that the locking mechanism can engage with the support and retain the support relative to the base.

The base comprises a second locking mechanism having a body and a cable extending therefrom and wherein the cable has a free end which is engagable with at least one of the second locking mechanism or the first locking mechanism, for locking accessories to the base via the cable.

The base may comprise at least one male projection and the support may comprise at least one female receptacle configured to receive the male projection.

At least one male projection may comprise an engaging part and the female receptacle may comprise an aperture through which the male projection extends in use for engagement of the engaging part with the support.

At least one male projection and at least one corresponding female receptacle may cooperate to guide the support into alignment with the base when the support is connected to the base. The base may comprise at least one groove which is configured to interface with a wheel of a storage container when the support is attached to a wheeled storage container. The groove may be configured to guide a wheeled storage container toward a position in which the locking part is in an engagable position relative to the support.

The base and the support may each be configured so that the support nests inside the base when the base and support are connected together.

The base may comprise one or more anchor points to which one or more accessories may be attached. One accessory may comprise a back rest for a passenger of a vehicle. One accessory may comprise a compartment and the compartment may house one or more covers for covering vehicle accessories and/or covering one or more parts of a vehicle to which the base may be attached.

### BRIEF DESCRIPTION OF THE DRAWINGS

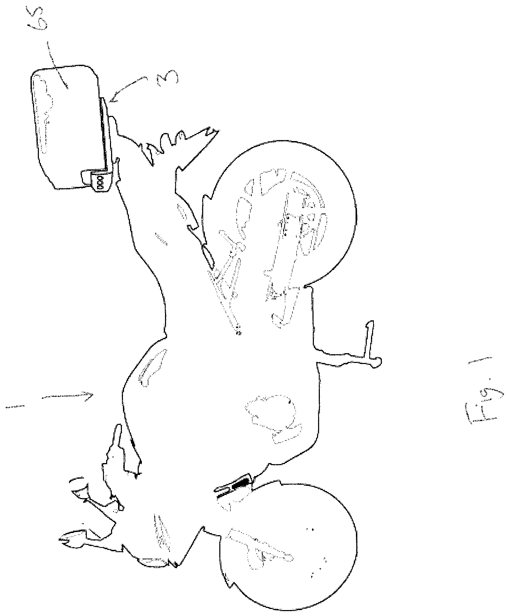

Preferred embodiments of the present invention will be explained in further detail below by way of examples and with reference to the accompanying drawings, in which:-
Fig. 1 shows a perspective view of an engagement system according to an embodiment of the invention when attached to a motorcycle and a motorcycle storage case;

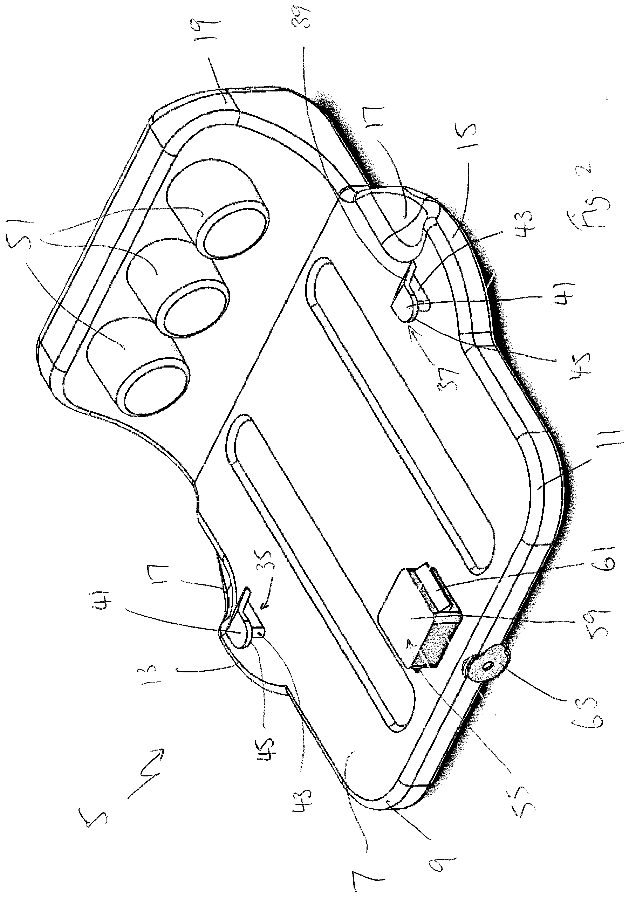

Fig. 2 shows a perspective view of a base part of the engagement system shown in Fig. 1;

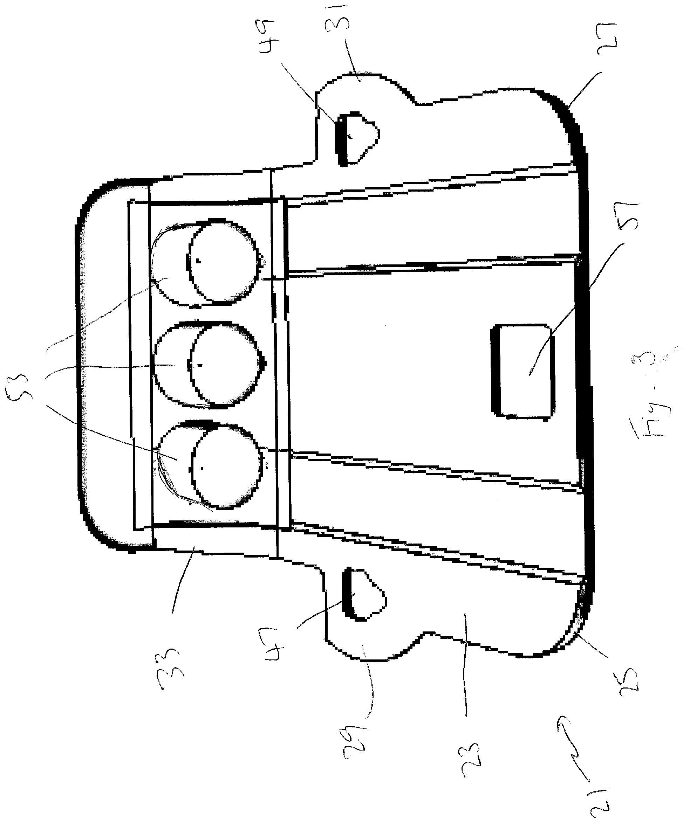

Fig. 3 shows a front perspective view of a support part of the engagement system shown in Fig. 1;

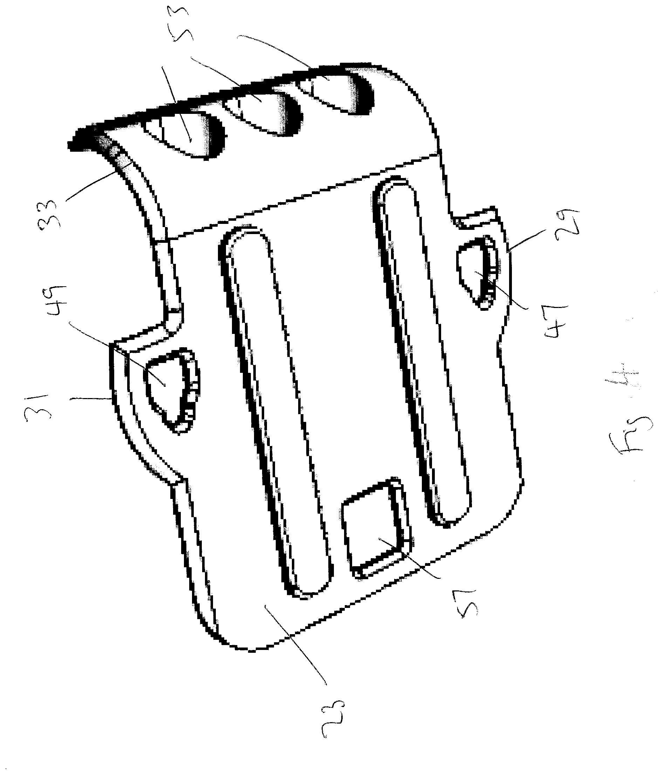

Fig. 4 shows a lower perspective view of the support part shown in Fig. 3;

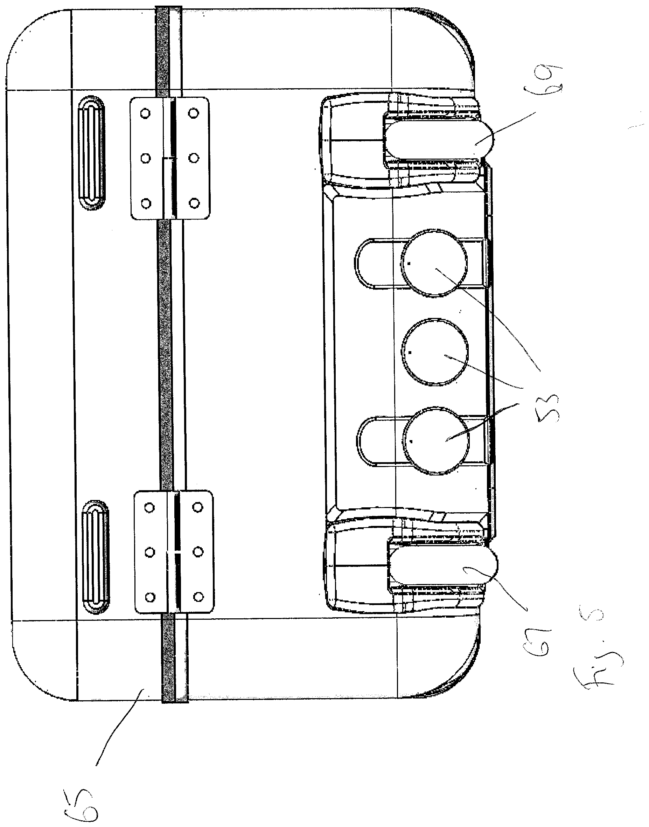

Fig. 5 shows a rear view of the case and support;

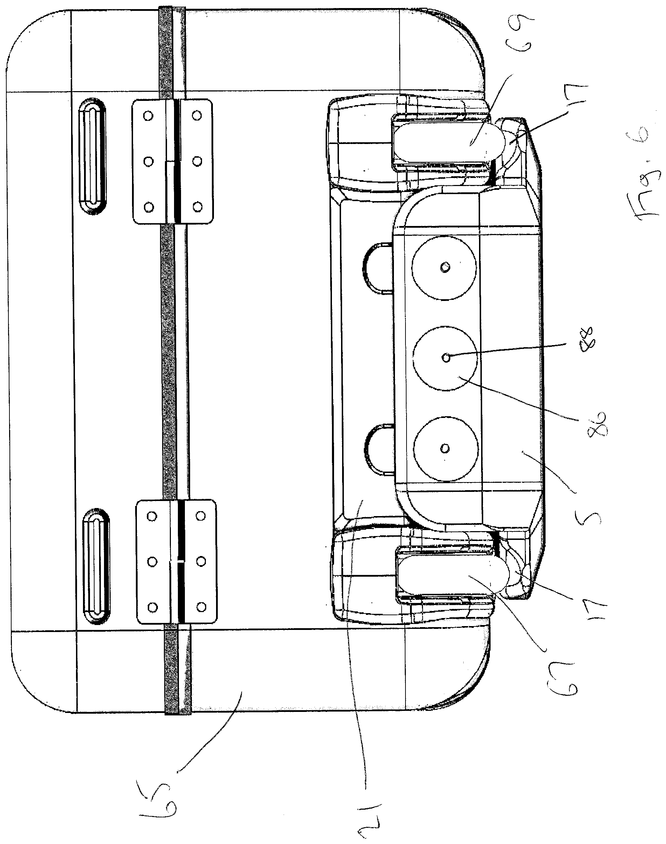

Fig. 6 shows a rear view of the case and support shown in Fig. 5 when attached to the base part shown in Fig. 2;

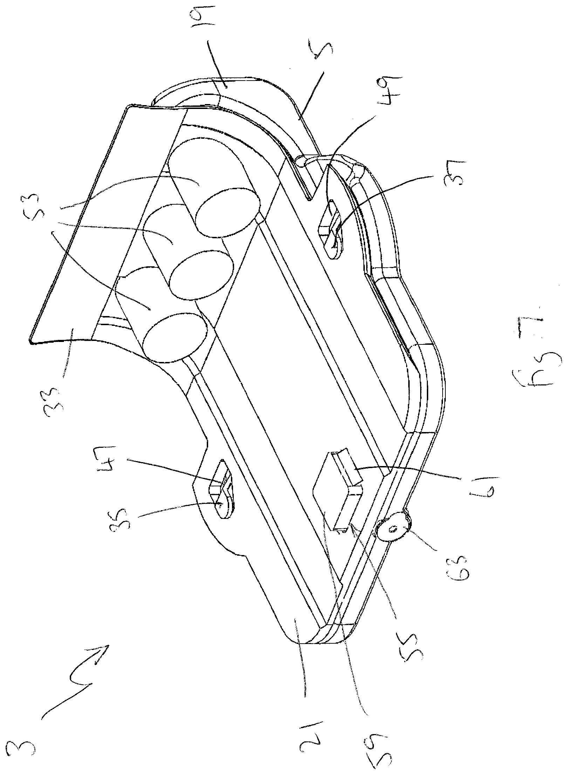

Fig 7 shows a perspective view of the base shown in Fig. 2 when attached to the support shown in Fig. 3;

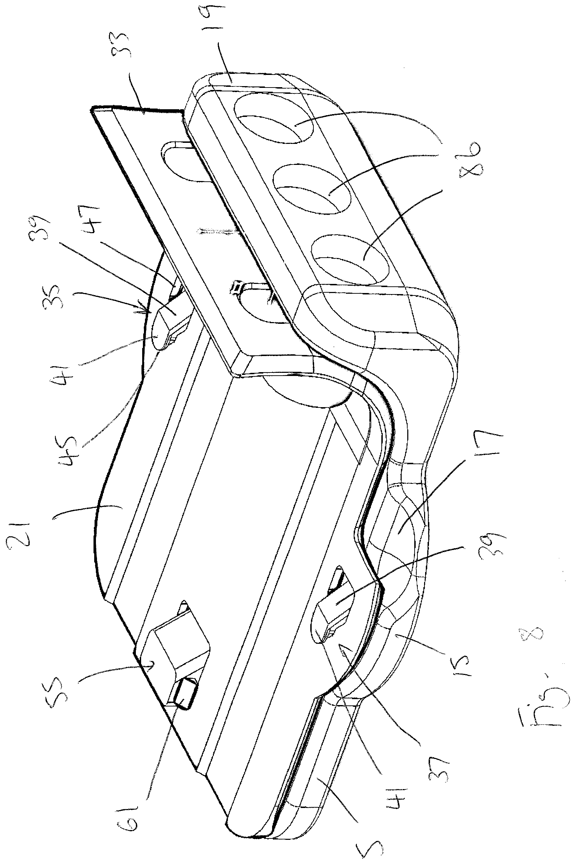

Fig. 8 shows a rear perspective view of the base and support shown in Fig. 7;

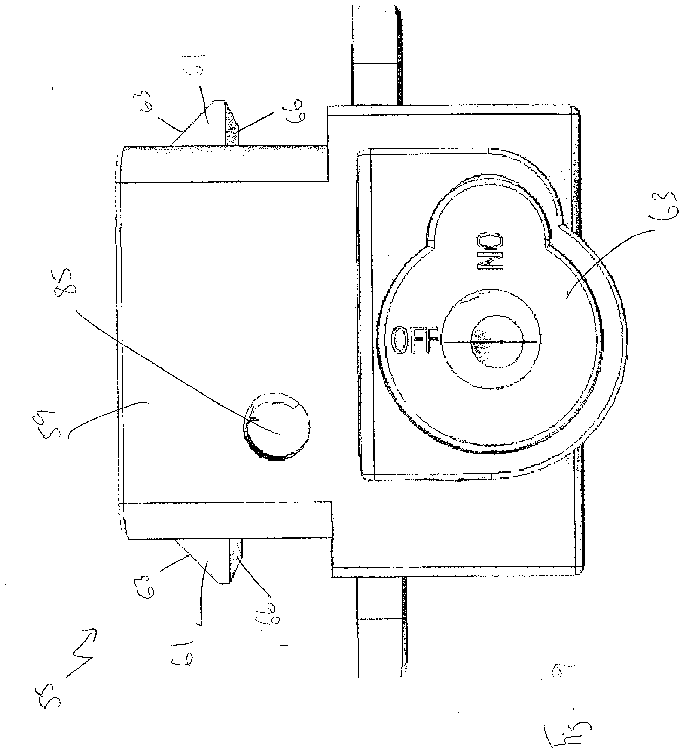

Fig. 9 shows a front view of a locking mechanism of the base shown in Fig. 2;

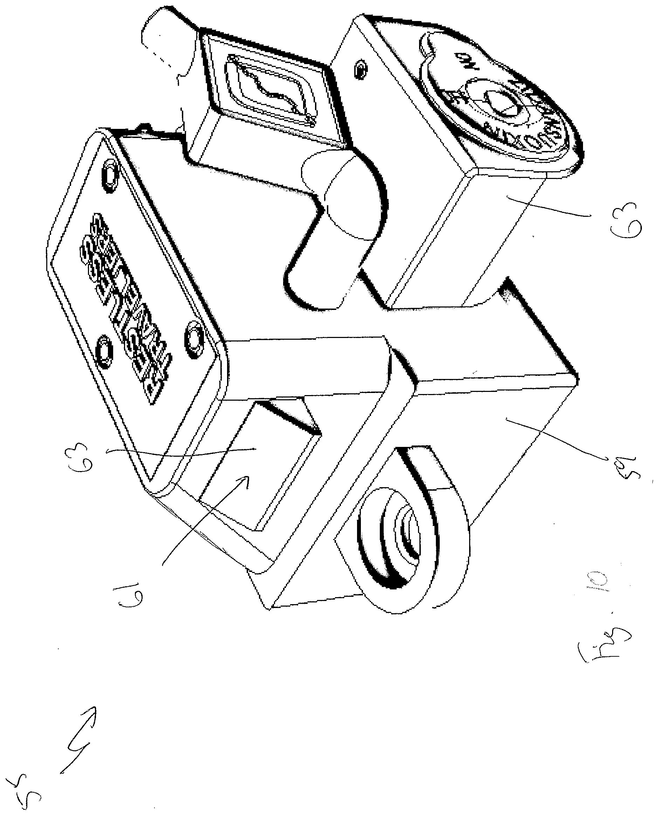

Fig. 10 shows a perspective view of the locking mechanism shown in Fig. 9;

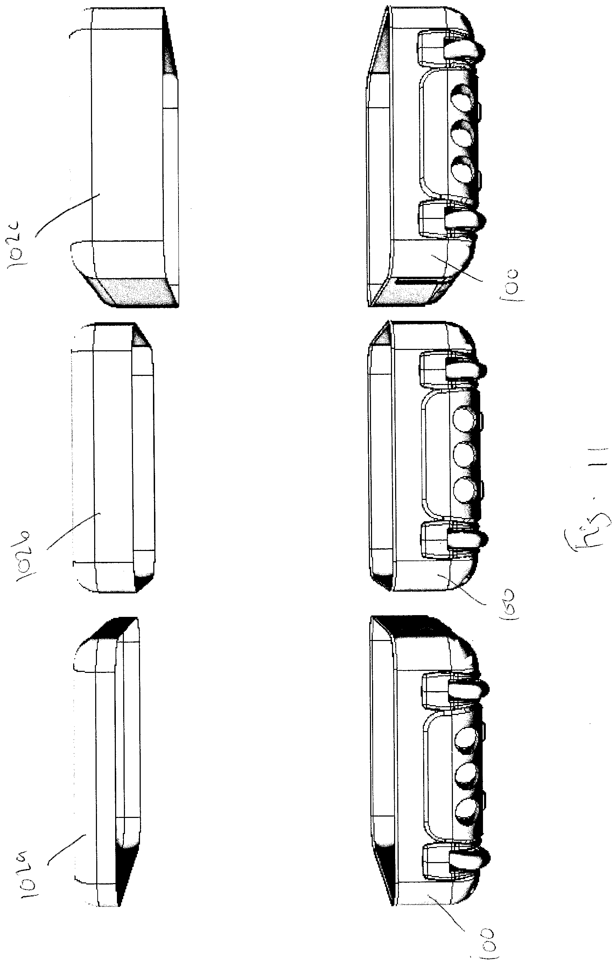

Fig. 11 shows a partially exploded view of three storage cases each with a different top part;

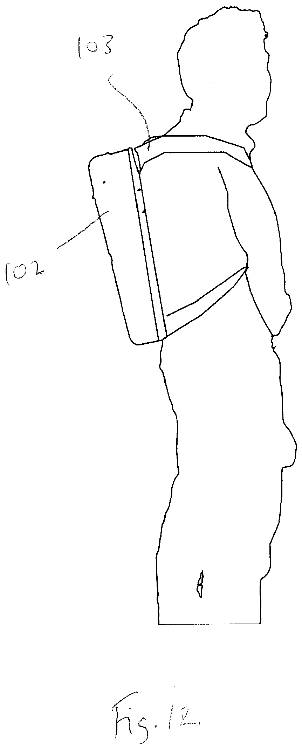

Fig. 12 shows an outline view of a wearer of a top part of a case shown in Fig. 1 with a back pack incorporated therein;

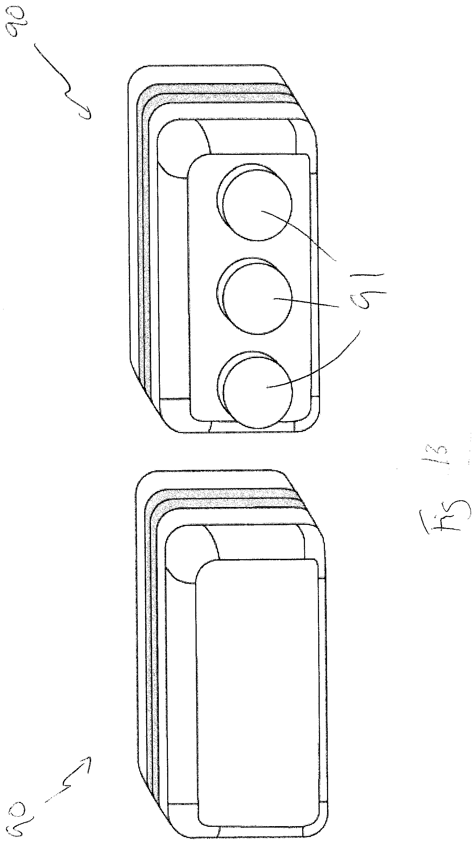

Fig. 13 shows front and rear perspective views of a storage pouch for use with the base shown in Fig. 4; and
Fig. 14 shows the pouch shown in Fig. 13 attached to the base with two covers shown in a fully deployed state.

### DETAILED DESCRIPTION OF THE PREFERRED EMBODIMENTS

The invention generally pertains to an engagement system for releasably securing a container to a vehicle such as a motorcycle.

Referring to the Figures, there is shown a motorcycle 1 comprising an engagement system 3 for attaching a storage container 65 to the motorcycle 1. In the embodiment depicted, the storage container 65 is a motorcycle case made from rigid plastics material having a generally cuboidal shape. It will be appreciated that the engagement system may be adapted for use with other non-covered vehicles such as bicycles or scooters. It will also be appreciated that different materials and shapes for the container 65 may be used with the engagement system 3.

The engagement system comprises a base 5 made from injection moulded plastics material having a substantially flat body portion 7 which is generally rectangular in shape and which has two radiused corners 9, 11. A pair of curved wings 13, 15 extends from opposite sides respectively of the flat body portion 7. A curved depression 17 (the purpose of which is described below) is formed in the surface of each wing 13, 15. The base 5 also has an arm portion 19 which extends substantially perpendicularly from an end of the body portion 7. Thus, the base 5 is substantially L-shaped in profile. The inner surface of the corner or interface between the body 7 and the arm 19 is substantially curved. In the embodiment depicted, the base 5 is directly releasably attached to the motorcycle by a plurality of connectors which securely fix the base to a frame section of the motorcycle.

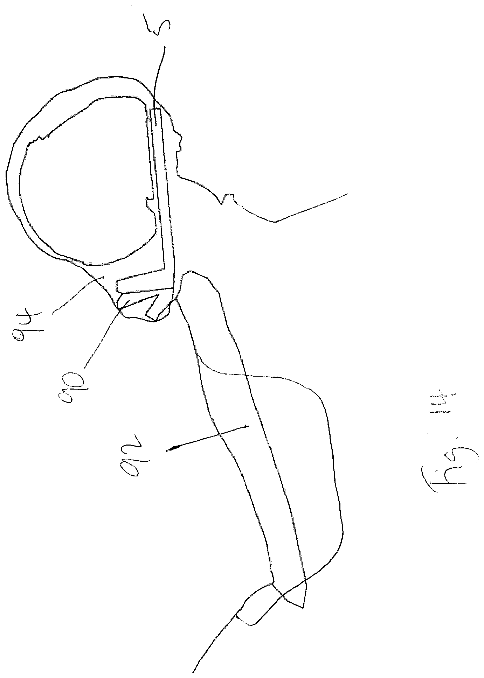

The engagement system 3 further comprises a support 21 which is also substantially L-shaped in profile and shaped so as to mate with the inner surface of the base 5. Thus, the shape and dimensions of the support 21 are chosen so as to substantially conform to the inner surface of the base 5. The support 21 is made from semi-rigid injection moulded plastics material and comprises a substantially flat and substantially rectangular body portion 23 with two radiused corners 25, 27 and a pair of curved wings 29, 31 extending from opposite sides respectively of the support 21. The support 21 further comprises an arm 33 which extends substantially perpendicular from an end of the body portion 23. The corner between the body 23 and the arm 33 of the support 21 is curved. The curvature of the corner is chosen to substantially match the curvature of the surface of the inner corner between the body 7 and arm 19 of the base 5. The height of the arm 19 is chosen so that, when the support 21 is in a mating relationship with the base 5 (as shown particularly in Fig. 14 and Fig 15), the arm 19 extends partially beyond the end of the arm 19 of the base 5.

The base 5 and the support 21 comprise mutually cooperating features which enable the support 21 to be attached to the base 5 and held in place relative to the base 5.

One set of cooperating features comprises a pair of hooks 35, 37 which each extend from the upper surface of the body 7 of the base 5 a distance greater than the thickness of the body 23 of the support 21. The two hooks 35, 37 are arranged to extend from the body 7 of the base 5 at or around the wings 13, 15 on opposite sides respectively of the body 7. Each hook 35, 37 comprises a sloping portion 39 and an engaging portion 41. The engaging portion 41 comprises a substantially flat piece which extends substantially parallel to the body 7 from the end of the sloping portion remote from the body 7. Each hook 35, 37 further comprises a spine 43 which extends between the body 7, sloping portion 39 and engaging portion 41. A lip 45 is formed between the engaging portion 41 and the spine 43. The end of the engaging portion 41 remote from the sloping portion 39 is curved so that it can be received into a corresponding feature of the support 21 without the risk of snagging. The two hooks 35, 37 slope in a direction away from the arm 19 and the two respective depressions 17 formed in the two wings 13, 15 in a direction parallel to the longitudinal axis of the case 65.

The corresponding cooperating features formed in the support 21 comprise a pair of apertures 47, 49 which extend through the body 23 of the support 21 at or around the wings 29, 31 of the support 21. Each aperture 47, 49 comprises a rectangular section and a curved section which are shaped to receive the hooks 35, 37 projecting from the base 5. The positions of the two apertures 47, 49 are chosen such that, when the support 21 is nested within the base 5 (as shown in Fig. 14), the hooks 35, 37 are aligned with the aperture 47, 49 so that the hooks 35, 37 can extend through the aperture 47, 49 and so that the lip 45 of the engaging portion 41 of each hook 47, 49 can engage the upper surface of the support 21 and at least partially hold the support 21 relative to the base 5.

A second cooperating feature comprises three substantially cylindrical projections 51 which are arranged in a linear formation and which extend substantially perpendicularly from the arm of the base 5. The corresponding cooperating feature formed on the support 21 comprises three substantially cylindrical recesses 53 formed in the arm 33 of the support. The female recesses 53 are shaped and positioned to receive the male projections 51 of the base 5 when the base 5 and support 21 are in a mating configuration as depicted in Fig. 15. The male projections 51 therefore serve to guide the support 21 into a mating configuration with the base 5 and to help retain the support 21 securely in the mating configuration.

A third cooperating feature comprises a locking mechanism 55 which is formed integrally with and projects from the upper surface of the body 7 of the base 5 at the mid point at the end of the body remote from the arm 17, and a correspondingly shaped locking aperture 57 formed in the body 23 of the support 21. The locking mechanism 55 comprises a substantially cuboidal housing 59 and its height is greater than the thickness of the support 21. A pair of latches 61 extend from opposite sides respectively of the housing 59 and are biased by springs (not shown) toward an extended position in which the latches 59 project from the housing 59. Each latch 61 has a sloping face 63 which is arranged to interface with the edges of the aperture 57. Each latch 61 also comprises an abutting face 66 adjacent the sloping face 63 which is arranged to engage with the upper surface of the support 21. The latches 61 are arranged so that they can be retracted at least substantially within the housing 59. The shape of the locking aperture 57 is chosen to substantially match the shape of a perimeter of a cross section of the housing 59 so that the housing 59 can extend through the aperture 57 with a reasonably tight fit but with sufficient clearance for the latches in a retracted state to pass through the aperture 57.

The locking mechanism 55 and locking aperture 57 are each positioned such that when the base 5 and support 21 are in a mating configuration, the housing 59 of the locking mechanism 55 is substantially aligned with and extends through the locking aperture 57 of the support 21. The two latches 61 are positioned on the housing 59 such that, when the housing 59 extends through the locking aperture 57, the two latches 61 are positioned beyond the upper surface of the support 21 so that the engaging faces 65 of the latches 61 interface and engage with the upper surface of the support 21 to at least partially restrain the support 21 relative to the base 5.

As discussed, in the embodiment depicted, the support 21 is made from semi-rigid injection moulded plastics material and this has some resilience to prevent the locking aperture 57 from flexing and thereby inadvertently disengaging the locking mechanism 55 so that the support 21 becomes detached from the base 5. It is envisaged that the support 21 may be made from any suitable material such as, for example, rubber or polymer material. In the event a less rigid material is chosen for the support 21 such that there is an unacceptable degree of flex in the locking aperture 57, a reinforcing plate is provided which has an aperture formed therein that corresponds to the shape and size of the locking mechanism. The reinforcing plate provides stability for the locking aperture 57 to ensure that the shape of the aperture does not substantially change through flexing and allow the locking mechanism 55 and hence the base 5 to inadvertently disengage from the support 21.

The locking mechanism 55 further comprises a tubular lock 63 which is connected to the latches 61 and arranged to lock the latches 61 in the projecting configuration upon actuation by a key. The tubular lock 63 is also arranged to pull the latches 61 at least substantially within the housing 59 in response to an unlocking operation by the key. The tubular lock is arranged to face away from the edge of the end of the base 5 remote from the arm 19 to allow easy access to the locking mechanism 55 by a key. It will be appreciated that other suitable locking mechanisms may be used. For example, the locking mechanism could alternatively comprise a magnetic lock and the key could be contactless.

The support 21 comprises a plurality of anchor points to enable the support 21 to be attached to a storage container 65. Thus, the support 21 may be retrofit to any type of storage container via the anchor points so that any storage container may be attached to a vehicle via the support 21 and base 5. In the embodiment depicted, the support 21 is attached to a bespoke motorcycle storage case 65 via a plurality of threaded holes and screws which comprise the anchor points. It will be appreciated that any suitable alternative may be used for securely attaching the support 21 to the storage case 65 such as rivets or straps.

The storage case 65 in the embodiment depicted comprises a pair of wheels 67, 69 and an extendible handle so that the case 65 may be converted from a compact, transportable state with the handle retracted into a mobile trolley bag configuration that is easily manoeuvrable along the ground. The support 5 is incorporated into one face of the case 65 and oriented such that each wing 13, 15 is aligned with a corresponding wheel 67, 69. The cooperating features of the base 5 and support 21 are therefore arranged such that, when the case 65 is attached to the base 5, the wheels 67, 69 are substantially equidistantly spaced apart about a central longitudinal axis of the base 5.

The spacing between the depressions 17 on the wings of the base 5 is chosen to substantially match the spacing between the wheels 67, 69 on the case 65. The position and orientation of the depressions 17 relative to the hooks 35, 37 are chosen so that during mounting of the case 65 and support 21 combination to the base 5, the wheels 67, 69 interface with the two depressions 17 and are guided in a direction conducive to guidance of the apertures 47, 49, 57 of the base toward and into an aligned position with the corresponding hooks 35, 37 and locking mechanism 55. Thus, the depressions 17 are shaped so that the case 65 can pivot about the two depressions 17 so as to facilitate a smooth locking operation between the support 21 and the base 5.

The engagement system 3 further comprises a locking device (not shown) for securing additional accessories such as a motorcycle helmet to the base 5. A space is defined within the internal casing of the base 5 for part of the locking device to be housed. The locking device comprises an anchor body which is firmly secured within the space defined in the base 5. The locking device further comprises a PVC coated steel cable which is secured to and extends from the anchor body through an aperture formed in the base 5 and outside the base 5.

The free end of the cable comprises a fixture point which is shaped to be received and captured by a securing point 85 which forms part of the locking mechanism 55. Thus, the locking mechanism 55 provides a dual function of locking and releasing the support 21 and also of locking and releasing accessories through interaction with the locking device.

The outer facing side of the arm 19 of the base 5 comprises three substantially circular depressions 86 which are substantially equal in diameter to the male projections 51 and on opposite sides respectively of the base arm 19. Each depression 86 comprises a threaded hole 88 to permit accessories to be attached to the base 5. In the embodiment depicted, a pouch 90 is secured to the base 5 via screws which extend through three anchor points 91 formed in the pouch 90 and into corresponding threaded holes 88. The pouch 90 contains a releasable waterproof seat cover 92 and a waterproof helmet cover 94. Alternative accessories may be attached to the base 5 via the securing points. For example, a back support or back rest (not shown) may be attached to the base 5 so that a rear passenger can be more securely and comfortably seated on the motorcycle 1.

The storage case 65 in the embodiment depicted comprises two body sections 100, 102 which together define the storage space. The first body section 100 comprises a base part of the case 65 and incorporates the wheels 67, 69, handle and support 21. The two sections 100, 102 are hingedly attached so that the case 65 can be easily opened to gain access to the storage space. A locking mechanism 103 is incorporated into the case 65 to lock and unlock the two sections 100, 102 depending upon whether or not access to the storage space is to be permitted or restricted. The top section 102 is detachable from the base section 100 so that different top sections with differing heights or colours may be interchangeable used with the base section 100. Thus, the dimensions and colours of the case 65 can be changed by selecting desired base 100 and top sections 102.

A backpack section 103 may additionally be incorporated into and fixed to the top section of the case so that the top section can be easily converted into a backpack arrangement when desired (as shown in Fig. 22). Alternatively, the back pack may be releasably attached to the internal part of the top section 102.

Further, the top section 102 may comprise a photovoltaic cell arrangement (not shown) on the upper face of the top section 102 so that solar energy may be converted into electrical energy. In this way, electronic devices may be stored within the case 65 during transit and simultaneously charged. To this end, the charging points are incorporated into the internal walls of the top section 102.

In an alternative embodiment, the support 21 comprises a pair of wheels and a retractable handle so that any storage container to which the support 21 may be attached can be transformed into a trolley bag.

In an alternative embodiment, the base comprises a conduit which extends through the base from one side of the base to the opposite side respectively of the base. The conduit is shaped and dimensioned to receive a PVC coated steel cable which can thus be fed through the base from one side to the other. A locking body is attached to one end of the cable and arranged on one side of the base so that a free end of the cable extending from the other side respectively can be looped around and securely connected back into the locking body. Therefore, the cable can be arranged to secure an accessory such as a helmet to the base.

It is envisaged that the support 21 may be attached to any appropriate container including, but not limited to, a back pack, an animal carry case and a canvas bag. It is also envisaged that the base 5 may be attached to any suitable transport vehicle including, but not limited to, a bicycle (front or back), a scooter and a quad bike. Thus, the engagement system 3 can be used to attach many different types of storage container securely to many different types of vehicle.

Advantageously, an engagement system according to the present invention may be used with any number of containers so that it is not necessary to have a bespoke container for a particular bracket. Further, moving the locking mechanism from the case 65 to the base 5 simplifies the construction of the case 65 and reduces the weight of the case 65. Having a locking mechanism on the base 5 also provides the ability to secure accessories to the base 5 when the support 21 has been removed from the base 5.

Whilst the present invention has been explained by reference to the examples or preferred embodiments described above, it will be appreciated that those are examples to assist understanding of the present invention and are not meant to be restrictive. Variations or modifications which are obvious or trivial to persons skilled in the art, as well as improvements made thereon, should be considered as equivalents of this invention.

## Claims

1. An engagement system (3) for attaching a container (65) to a vehicle (1), the engagement system comprising:
a support (21) which is attachable to a container (65);
a base (5) which is attachable to a vehicle (1) and having a locking member (55) for releasably securing the support (21) to the base (5);
wherein the base (5) and the support (21) are inter-engageable such that upon attachment of the base (5) to the vehicle (1) and upon attachment of the support (21) to the container (65), the base (5) and the support (21) are maintained in inter-engagement with each other by the locking member (55) to releasably secure the container (65) to the vehicle (1);
wherein the locking member comprises a locking mechanism (55) and the support (21) comprises an aperture (47, 49) through which at least part of the locking mechanism (55) may extend so that the locking mechanism (55) can engage with the support (21) and retain the support relative to the base (5);
**characterised in that** the locking mechanism (55) is key operable; and wherein the base (5) comprises a second locking mechanism having a body and a cable extending therefrom and wherein the cable has a free end which is engageable with at least one of the second locking mechanism or the first locking mechanism (55), for locking accessories to the base (5) via the cable.

2. An engagement system as claimed in claim 1, wherein the support (21) is releasably attachable to a container (65) for attachment of the support (21) with at least one of a plurality of different storage containers (65).

3. An engagement system as claimed in claim 1 or claim 2, wherein the support (21) comprises one or more wheels (67, 69).

4. An engagement system as claimed in any preceding claim, wherein the support (21) comprises a retractable handle.

5. An engagement system as claimed in any preceding claim, wherein the base (5) comprises at least one male projection (51) and the support comprises at least one female receptacle (53) configured to receive the male projection.

6. An engagement system as claimed in claim 5, wherein at least one male projection (51) comprises an engaging part and wherein the female receptacle (53) comprises an aperture through which the male projection extends in use for engagement of the engaging part with the support (21).

7. An engagement system as claimed in claim 5 or claim 6, wherein at least one male projection (51) and at least one corresponding female receptacle (53) cooperate to guide the support (21) into alignment with the base (5) when the support (21) is connected to the base (5).

8. An engagement system as claimed in any preceding claim, wherein the base (5) comprises at least one groove which is configured to interface with a wheel of a storage container when the support (21) is attached to a wheeled storage container (65).

9. An engagement system as claimed in claim 8, wherein the groove is configured to guide a wheeled storage container (65) toward a position in which the locking part is in an engageable position relative to the support (21).

10. An engagement system as claimed in any preceding claim, wherein the base (5) and the support (21) are each configured so that the support (21) nests inside the base (5) when the base and support are connected together.

11. An engagement system as claimed in any preceding claim, wherein the base (5) comprises one or more anchor points (91) to which one or more accessories may be attached.

## Patentansprüche

1. Eingriffssystem (3) zum Anbringen eines Behälters (65) an einem Fahrzeug (1), wobei das Eingriffssystem Folgendes umfasst:
einen Träger (21), der an einem Behälter (65) anbringbar ist;
eine Basis (5), die an einem Fahrzeug (1) anbringbar ist und ein Verriegelungselement (55) aufweist, um den Träger (21) an der Basis (5) freigebbar zu befestigen;
wobei die Basis (5) und der Träger (21) miteinander austauschbar sind, so dass beim Anbringen der Basis (5) an dem Fahrzeug (1) und beim Anbringen des Trägers (21) an dem Behälter (65) die Basis (5) und der Träger (21) durch das Verriegelungselement (55) in gegenseitigem Eingriff miteinander gehalten werden, um den Behälter (65) freigebbar an dem Fahrzeug (1) zu befestigen;
wobei das Verriegelungselement einen Verriegelungsmechanismus (55) umfasst, und der Träger (21) eine Öffnung (47, 49) umfasst, durch die sich mindestens ein Teil des Verriegelungsmechanismus (55) erstrecken kann, so dass der Verriegelungsmechanismus (55) in den Träger (21) eingreifen und den Träger in Bezug auf die Basis (5) halten kann;
**dadurch gekennzeichnet, dass** der Verriegelungsmechanismus (55) mit einem Schlüssel bedienbar ist; und wobei die Basis (5) einen zweiten Verriegelungsmechanismus umfasst, der einen Körper und ein Kabel aufweist, das sich davon erstreckt, und wobei das Kabel ein freies Ende aufweist, das in mindestens einen des zweiten Verriegelungsmechanismus oder des ersten Verriegelungsmechanismus (55) einfügbar ist, um Zubehörteile an der Basis (5) über das Kabel zu verriegeln.

2. Eingriffssystem nach Anspruch 1, wobei der Träger (21) freigebbar an einem Behälter (65) zum Anbringen des Trägers (21) mit mindestens einem einer Vielzahl unterschiedlicher Lagerbehälter (65) anbringbar ist.

3. Eingriffssystem nach Anspruch 1 oder 2, wobei der Träger (21) ein oder mehrere Räder (67, 69) umfasst.

4. Eingriffssystem nach einem vorstehenden Anspruch, wobei der Träger (21) einen einziehbaren Griff umfasst.

5. Eingriffssystem nach einem vorstehenden Anspruch, wobei die Basis (5) mindestens einen Steckvorsprung (51) umfasst, und der Träger mindestens eine Aufnahmebuchse (53) umfasst, die konfiguriert ist, um den Steckvorsprung zu aufzunehmen.

6. Griffsystem nach Anspruch 5, wobei mindestens ein Steckvorsprung (51) einen Eingriffsteil umfasst, und wobei die Aufnahmebuchse (53) eine Öffnung umfasst, durch die sich der Steckvorsprung bei der Verwendung zum Eingreifen des Eingriffsteils in den Träger (21) erstreckt.

7. Eingriffssystem nach Anspruch 5 oder Anspruch 6, wobei mindestens ein Steckvorsprung (51) und mindestens eine entsprechende Aufnahmebuchse (53) zusammenwirken, um den Träger (21) in Ausrichtung mit der Basis (5) zu führen, wenn der Träger (21) mit der Basis (5) verbunden ist.

8. Eingriffssystem nach einem vorstehenden Anspruch, wobei die Basis (5) mindestens eine Nut umfasst, die konfiguriert ist, um eine Schnittfläche mit einem Rad eines Lagerbehälters zu bilden, wenn der Träger (21) an einem Lagerbehälter mit Rädern (65) angebracht ist.

9. Eingriffssystem nach Anspruch 8, wobei die Nut konfiguriert ist, um einen Lagerbehälter mit Rädern (65) zu einer Position zu führen, in der sich das Verriegelungsteil in einer Eingriffsposition in Bezug auf den Träger (21) befindet.

10. Eingriffssystem nach einem vorstehenden Anspruch, wobei die Basis (5) und der Träger (21) jeweils derart konfiguriert sind, dass sich der Träger (21) innerhalb der Basis (5) einnistet, wenn die Basis und der Träger miteinander verbunden sind.

11. Eingriffssystem nach einem vorstehenden Anspruch, wobei die Basis (5) einen oder mehrere Verankerungspunkte (91) umfasst, an welchen ein oder mehrere Zubehörteile angebracht sein können.

## Revendications

1. Système de mise en prise (3) pour l'attache d'un contenant (65) à un véhicule (1), le système de mise en prise comprenant :
un support (21) qui peut être attaché à un contenant (65) ;
une base (5) qui peut être attachée à un véhicule (1) et présentant un élément de verrouillage (55) pour la fixation libérable du support (21) à la base (5) ;
dans lequel la base (5) et le support (21) peuvent être mise en prise l'un avec l'autre de sorte que suite à l'attache de la base (5) au véhicule (1) et suite à l'attache du support (21) au contenant (65), la base (5) et le support (21) soient maintenus en mise en prise l'un avec l'autre par l'élément de verrouillage (55) pour fixer de manière libérable le contenant (65) au véhicule (1) ;
dans lequel l'élément de verrouillage comprend un mécanisme de verrouillage (55) et le support (21) comprend une ouverture (47, 49) au travers de laquelle au moins une partie du mécanisme de verrouillage (55) peut s'étendre de sorte que le mécanisme de verrouillage (55) puisse se mettre en prise avec le support (21) et retenir le support par rapport à la base (5) ;
**caractérisé en ce que** le mécanisme de verrouillage (55) est actionnable par touche; et dans lequel la base (5) comprend un second mécanisme de verrouillage présentant un corps et un câble s'étendant depuis celui-ci et dans lequel le câble présente une extrémité libre qui peut être mise en prise avec au moins un du second mécanisme de verrouillage ou du premier mécanisme de verrouillage (55), pour le verrouillage d'accessoires à la base (5) via le câble.

2. Système de mise en prise selon la revendication 1, dans lequel le support (21) peut être attaché de manière libérable à un contenant (65) pour l'attache du support (21) avec au moins un d'une pluralité de différents contenants de stockage (65).

3. Système de mise en prise selon la revendication 1 ou la revendication 2, dans lequel le support (21) comprend une ou plusieurs roues (67, 69).

4. Système de mise en prise selon l'une quelconque des revendications précédentes, dans lequel le support (21) comprend un manche rétractable.

5. Système de mise en prise selon l'une quelconque des revendications précédentes, dans lequel la base (5) comprend au moins une projection mâle (51) et le support comprend au moins un réceptacle femelle (53) configuré pour recevoir la projection mâle.

6. Système de mise en prise selon la revendication 5, dans lequel au moins une projection mâle (51) comprend une partie de mise en prise et dans lequel le réceptacle femelle (53) comprend une ouverture au travers de laquelle la projection mâle s'étend en utilisation pour la mise en prise de la partie de mise en prise avec le support (21).

7. Système de mise en prise selon la revendication 5 ou la revendication 6, dans lequel au moins une projection mâle (51) et au moins un réceptacle femelle correspondant (53) coopèrent pour guider le support (21) en alignement sur la base (5) lorsque le support (21) est raccordé à la base (5).

8. Système de mise en prise selon l'une quelconque des revendications précédentes, dans lequel la base (5) comprend au moins une rainure qui est configurée pour faire interface avec une roue d'un contenant de stockage lorsque le support (21) est attaché à un contenant de stockage à roue (65).

9. Système de mise en prise selon la revendication 8, dans lequel la rainure est configurée pour guider un contenant de stockage à roue (65) vers une position dans laquelle la partie de verrouillage est dans une position pouvant être mise en prise par rapport au support (21).

10. Système de mise en prise selon l'une quelconque des revendications précédentes, dans lequel la base (5) et le support (21) sont chacun configurés de sorte que le support (21) niche à l'intérieur de la base (5) lorsque la base et le support sont raccordés ensemble.

11. Système de mise en prise selon l'une quelconque des revendications précédentes, dans lequel la base (5) comprend un ou plusieurs points d'ancrage (91) auxquels un ou plusieurs accessoires peuvent être attachés.
